# EUROPEAN PATENT SPECIFICATION

(11) **EP 4 417 099 B1**
(45) Date of publication and mention of the grant of the patent: **26.11.2025**
(21) Application number: 23156819.7
(22) Date of filing: 15.02.2023
(51) Int. Cl.: A47L 5/30, A47L 9/04, A47L 9/28

(54) **HANDHELD VACUUM CLEANER**
HANDSTAUBSAUGER
ASPIRATEUR PORTATIF

(43) Date of publication of application: 21.08.2024
(73) Proprietor: BSH Hausgeräte GmbH, 81739 München (DE)
(72) Inventor: Pluskwa, Karol, 35-021 Rzeszów (PL); Bilanski, Artur, 35-051 Rzeszow (PL); Osiniak, Mateusz, 36-050 Sokolów Malopolski (PL); Radlowski, Mateusz, 35-016 Rzeszów (PL)

(56) References cited:
- WO-A1-2020/213076
- DE-A1- 102018 126 103
- DE-U1- 202018 104 549

## Description

The present invention relates to a vacuum cleaner, especially to a handheld vacuum cleaner having a nozzle comprises brush rollers for picking up all the debris etc.

In the past, handheld vacuum cleaners were relatively small, highly portable vacuum cleaners, suited particularly to relatively low duty applications such as spot cleaning floors and upholstery in the home, interior cleaning of cars and boats etc., but currently, with the development of the technology in the fields of batteries and suction units handheld vacuum cleaners can replace conventional vacuum cleaners in cleaning apartments and rooms.

There are many types of the handheld vacuum cleaners. A common feature is that they should be as compact and lightweight as possible to easily be carried around for cleaning in desirable locations. One of this kind typically is not provided with a suction hose as conventional vacuum cleaners, which normally are positioned on the floor during use. Instead, the nozzle is pushed across the floor by the user by means of a small and lightweight body of the handheld vacuum cleaner, that is held in the hand, and connected to the nozzle by a rigid suction tube, for comfortable use.

For facilitating cleaning apartments and flats the nozzle can be provided with a single brush roller or with a pair or more brush rollers for increasing cleaning efficiency and often with wheels, such that the nozzle can be rolled over the surface to be cleaned, while keeping the nozzle opening spaced a small distance from the surface for generating of a fast flowing air stream to draw the debris and dust into the nozzle air inlet channel. Accordingly, the wheels function also as spacers for maintaining at least the nozzle a desired distance from the surface being cleaned. In most cases it is sufficient if the nozzle is provided with two wheels, which preferably are rotatable about a common rotation axis. An unfavorable phenomenon associated with the air flow under the nozzle is the sucking of the nozzle to the cleaned surface, which causes a significant increase in resistance when moving it across the cleaned surface, what the user perceives as an inconvenience.

The document CN113520210A discloses a handheld dust collector and a motion control method thereof. The handheld dust collector comprises a floor brush assembly, a dust collection assembly and an induction part, the dust collection assembly is connected to the floor brush assembly and swings relative to the floor brush assembly, and the induction part is arranged on the floor brush assembly or the dust collection assembly. The motion control method comprises the following steps: swing information of the dust collection assembly relative to the floor brush assembly is obtained through the induction part; and the floor brush assembly is controlled to move based on the swing information.

The document DE202018104549U1 discloses a suction nozzle for a vacuum cleaner for cleaning a floor covering, in particular carpeting, with a housing, a suction mouth formed on the underside of the housing, a suction mouth formed in the housing and attached to the suction mouth adjoining suction chamber, a vertically movably mounted brush roller arranged in the suction chamber and rotatable about a substantially horizontal axis of rotation, a motor for driving the brush roller and an actuating device for changing the mode of action of the brush roller, and the actuating device is adapted so that, when cleaning a hard floor , the brush roller is lifted off the hard floor so that relative to the Hard floor below the brush roller results in a gap, and / or to change the rotation of the brush roller from a unidirectional rotation to an oscillating rotation when cleaning a hard floor.

The document WO2020213076A1 discloses a novel vacuum cleaner that assists user operations for moving a suction head. A suction head sucks up waste material on a surface being cleaned, and comprises rotary brushes. The rotary brush is attached to a rotary shaft. The rotary brush is attached to the rotary shaft, and is driven independently from the rotary brush. The rotary brush is attached to a rotary shaft, which is parallel to the rotary shaft, and is disposed on the same side as the rotary brush. The rotary brush is attached to the rotary shaft, is provided on the same side as the rotary brush, and is driven independently from the rotary brush. The rotary brushes are subjected to independent drive control according to the direction of a user operation for moving the suction head.

The object of the present invention is further development of the prior art vacuum cleaners as well as to provide a vacuum cleaner, and more particular a handheld vacuum cleaner, wherein the user can use the said handheld vacuum cleaner to clean the surface in an energy-saving manner by assisted moving of the nozzle.

In accordance with the present invention, there is provided a handheld vacuum cleaner comprising a body, a handle arranged on the body, a nozzle connected with the body via a suction pipe and having at least two independently rotating brush rollers for cleaning a surface, an input unit for providing data for assisting movement of the nozzle, two or more electric motors connected to the brush rollers and providing a rotational force, rotary encoders connected with the brush rollers to count the number and direction of their revolutions, and a control unit having a processor with memory for processing and storing data and for driving the electric motors by applying a voltage to the motors, and the input unit is arranged in the nozzle and provided with an inertial measurement unit (IMU) sensor is configured to measure an accelerations along XY-axes and an angle of rotation around the Z-axis that is perpendicular to the cleaned surface which is defined by axes XY-axes, and the control unit is being arranged to receive data from the input unit to drive the motors according to the measured accelerations along XY-axes and the angle of rotation around the Z-axis for assisting movement of the nozzle in one or more predetermined directions.

Advantageously, the input unit with the IMU sensor measures an accelerations along XY-axes and an angle of rotation around the Z-axis and hence detects the direction of moving of the nozzle given by the user, and based on this the control unit drive the electric motors and accordingly two separated brush rollers that have a contact with cleaned surface causing transfer the torque to support movement of the nozzle in the same direction as given, so as to assist the movement of the nozzle and accordingly the handheld vacuum cleaner, thereby saving the user energy and manual work.

In a preferred embodiment of the invention a control unit is configured to drive the motors by applying voltages to the motors which varies depending on a value of the voltage gained by multiplying an angle of rotation around the Z-axis signal received from the input unit by a first constant and the value of the voltage gained by multiplying accelerations along XY-axes by a second constant. Advantageously the control unit provides the right electric motor with the voltage which is a sum of a predetermined constant value of the voltage and a value of the voltage gained by multiplying an angle of rotation around the Z-axis signal received from the input unit by a first constant and a value of the voltage gained by multiplying accelerations along XY-axes by a second constant, and the left electric motor is provided with the voltage which is the predetermined constant value of the voltage minus the value of the voltage gained by multiplying an angle of rotation around the Z-axis signal received from the input unit by a first constant, and minus the value of the voltage gained by multiplying accelerations along XY-axes by a second constant. In particular, the forward movement of the handheld vacuum cleaner is supported, as the backward pulling movement is not so energy intensive for the user.

In another preferred embodiment of the invention the nozzle comprises a right and a left wheels, rotatable provided in a lower portion of the nozzle disposed on the sides of the nozzle and configured to drive the nozzle across the cleaned surface, wherein each of the wheels is provided with rotatable encoders and electric motors being configured to drive them by the control unit. Preferable the control unit is configured to drive wheels in the same direction and with the same rotational speed as the brush roller placed on the same side of the nozzle.

In another preferred embodiment of the invention the body is provided with a joystick controller having a sensor equipped with an operating rod that is pivotally mounted relative to the body about a pivot center within the body so as to effect movement of the operating rod the sensor provides an output signal indicative of a degree of pivotal movement of the operating rod, for controlling the nozzle assisted movement. Preferably the control unit is configured to receive the output signal of the sensor and to drive brush rollers or/and drive wheels.

In another preferred embodiment of the invention the nozzle is equipped with an optical sensor providing an output indicative of the amount and direction of movement of the nozzle relative to the cleaned surface, wherein the control unit is configured to receive and process data.

In another preferred embodiment of the invention the body is provided with an inertial measurement unit (IMU) sensor which is configured to measure accelerations of the body along XYZ-axes for controlling the nozzle assisted movement.

A Method for operating the handheld vacuum cleaner according to the present invention comprises the following method steps: driving brush rollers both with the same predetermined rotational speed by the control unit supplying it with the predetermined value of the voltage, measuring accelerations of the nozzle along XY-axes by the inertial measurement unit (IMU) sensor of the input unit, measuring the angle of rotation of the nozzle around the Z-axis, wherein the Z-axis is perpendicular to the cleaned surface defined by XY-axes by the inertial measurement unit (IMU) sensor of the input unit, the control unit drives the brush rollers according to measuring accelerations of the nozzle along XY-axes and/or angle of rotation of the nozzle around the Z-axis, wherein the control unit provides the right electric motor connected to the right brush roller with the voltage which is a sum of a predetermined constant value of the voltage and a value of the voltage gained by multiplying an angle of rotation around the Z-axis signal received from the input unit by a first constant and a value of the voltage gained by multiplying accelerations along XY-axes by a second constant, and providing the left electric motor connected to the left brush roller with the voltage which is the predetermined constant value of the voltage minus the value of the voltage gained by multiplying an angle of rotation around the Z-axis signal received from the input unit by a first constant, and minus the value of the voltage gained by multiplying accelerations along XY-axes by a second constant.

Further benefits and advantages of the present invention will become apparent after a careful reading of the detailed description with appropriate reference to the accompanying drawings.

In the drawings:
Fig. 1 is a schematic view from above of the vacuum cleaner in accordance with one of the preferred embodiment.
Fig. 2 is a block view of the nozzle in accordance with another preferred embodiment of the present invention.

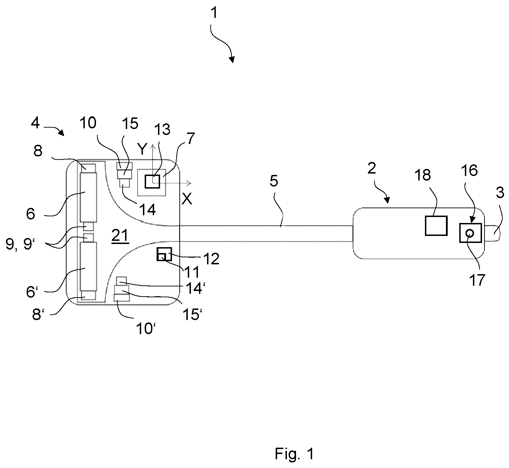

Reference is made to Fig. 1 which is a schematic view from above of the handheld vacuum cleaner in accordance with one of the preferred embodiment. The handheld vacuum cleaner 1 comprises a body 2, a handle 3 arranged on the body 2, a nozzle 4 connected with the body 2 via a suction pipe 5 and having at two rotating roller brushes a right brush roller 6, a left brush roller 6' both for cleaning a surface and which rotate about an axis that is perpendicular in relation to direction of the nozzle 4 movement. Furtherly, the handheld vacuum cleaner 1 has an input unit 7 with an inertial measurement unit IMU sensor 13 for providing data for assisting movement of the nozzle 4, and two electric motors, a right electric motor 8 and a left electric motor 8' connected accordingly to the brush rollers 6, 6' and providing a rotational force. Also comprises rotary encoders, a right encoder 9 and left encoder 9' connected accordingly with the brush rollers 6, 6' to count the number and direction of their revolutions, and a control unit 12 having a processor 11 with memory for processing and storing data and for driving the electric motors 8, 8'. The input unit 7 is arranged in the nozzle 4 and provided with an inertial measurement unit IMU sensor 13 that is configured to measure an accelerations along XY-axes and an angle α of rotation around the Z-axis, that is perpendicular to the cleaned surface which is defined by axes XY-axes. The control unit 12 receives data from the input unit 7 to drive the electric motors 8, 8' according to the measured accelerations along XY-axes and the angle of rotation around the Z-axis for assisting movement of the nozzle 4 in one or more predetermined directions. The control unit 12 is configured to drive the motors 8, 8' by applying voltages to the motors 8, 8' which varies depending on a value of the voltage gained by multiplying an angle of rotation around the Z-axis signal received from the input unit 7 by a first constant and the value of the voltage gained by multiplying accelerations along XY-axes by a second constant. The control unit 12 provides the right electric motor 8 with the voltage which is a sum of a predetermined constant value of the voltage and a value of the voltage gained by multiplying the angle α of rotation around the Z-axis signal received from the input unit 7 by a first constant and a value of the voltage gained by multiplying accelerations along XY-axes by a second constant, and the left electric motor 8' is provided with the voltage which is the predetermined constant value of the voltage minus the value of the voltage gained by multiplying an angle of rotation around the Z-axis signal received from the input unit 7 by a first constant, and minus the value of the voltage gained by multiplying accelerations along XY-axes by a second constant. The nozzle 4 is provided with two wheels, a right wheel 10, a left wheel 10' rotatable provided in a lower portion of the nozzle 4 disposed on the sides of the nozzle 4 and configured to drive the nozzle 4 across the cleaned surface, wherein each of the wheels 10, 10' is provided with rotatable encoders i.e., a right encoder 14, a left encoder 14' and electric motors, a right electric motor 15, a left electric motor 15' being configured to drive them by the control unit 12. in the same direction and with the same rotational speed as respectively the brush roller 6, 6' placed on the same side of the nozzle 4. Additionally, the body 2 is provided with a joystick controller 16 having a sensor equipped with an operating rod 17 that is pivotally mounted relative to the body 2 about a pivot center within the body 3, so as to effect movement of the operating rod 17 the sensor provides an output signal indicative of a degree of pivotal movement of the operating rod 17. The control unit 12 is configured to receive the output signal of the sensor and to drive brush rollers 6, 6' or/and drive wheels 10, 10'. The nozzle 4 is equipped with an optical sensor for supporting measurements of the IMU sensor 13, and providing an output indicative of the amount and direction of movement of the nozzle 4 relative to the cleaned surface, wherein the control unit 12 is configured to receive and process data. The body 2 is also provided with an inertial measurement unit IMU sensor 18 which is configured to measure accelerations of the body 2 along XYZ-axes for assisted movement of the nozzle 4 based on the body 2 movement in relation to XYZ-axes.

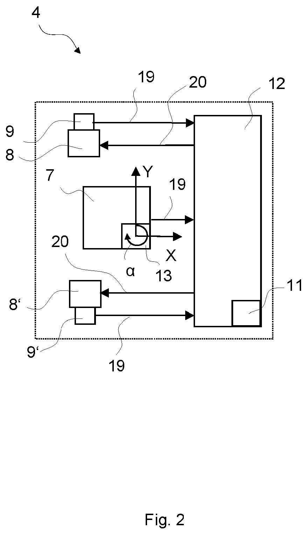

Reference is made to Fig. 2 which is a block view of the nozzle in accordance with another preferred embodiment of the present invention. The handheld vacuum cleaner 1 comprises a body 2, a handle 3 arranged on the body 2, a nozzle 4 connected with the body 2 via a suction pipe 5 and having at least two rotating roller brushes namely a right brush roller 6, a left brush roller 6' both for cleaning a surface and which rotate about an axis that is perpendicular in relation to direction of the nozzle 4 movement. Furtherly, the handheld vacuum cleaner 1 has an input unit 7 for providing data for assisting movement of the nozzle 4, two electric motors, namely a right electric motor 8 and a left electric motor 8' connected accordingly to the brush rollers 6, 6' and providing a rotational force, and rotary encoders, a right encoder 9 and left encoder 9' connected accordingly with the brush rollers 6, 6' to count the number and direction of their revolutions, and a control unit 12 having a processor 11 with memory for processing and storing data and for driving the electric motors 8, 8'. The input unit 7 is arranged in the nozzle 4 and provided with an inertial measurement unit IMU sensor 13 that is configured to measure an accelerations along XY-axes and an angle α of rotation around the Z-axis, that is perpendicular to the cleaned surface which is defined by axes XY-axes. The control unit 12 receives data from the input unit 7 to drive the electric motors 8, 8' according to the measured accelerations along XY-axes and the angle of rotation around the Z-axis for assisting movement of the nozzle 4 in one or more predetermined directions. The control unit 12 is configured to drive the motors 8, 8' by applying voltages to the motors 8, 8' which varies depending on a value of the voltage gained by multiplying an angle of rotation around the Z-axis signal received from the input unit 7 by a first constant and the value of the voltage gained by multiplying accelerations along XY-axes by a second constant. The control unit 12 provides the right electric motor 8 with the voltage which is a sum of a predetermined constant value of the voltage and a value of the voltage gained by multiplying the angle α of rotation around the Z-axis signal received from the input unit 7 by a first constant and a value of the voltage gained by multiplying accelerations along XY-axes by a second constant, and the left electric motor 8' is provided with the voltage which is the predetermined constant value of the voltage minus the value of the voltage gained by multiplying an angle of rotation around the Z-axis signal received from the input unit 7 by a first constant, and minus the value of the voltage gained by multiplying accelerations along XY-axes by a second constant.

### List of reference signs

- 1: handheld vacuum cleaner
- 2: body
- 3: handle
- 4: nozzle
- 5: suction pipe
- 6, 6': brush roller (right, left)
- 7: input unit
- 8, 8': electric motor (right, left)
- 9, 9': rotary encoder (right, left)
- 10, 10': wheel
- 11: processor
- 12: control unit
- 13, 18: (IMU) inertial measurement unit sensor
- 14, 14': rotatable encoders
- 15, 15': electric motor
- 16: joystick controller
- 17: operating rod
- 18: (IMU) inertial measurement unit sensor
- 19: measurement signal
- 20: control voltage
- 21: air inlet channel
- α: angle of rotation about Z-axis

## Claims

1. A handheld vacuum cleaner (1) comprising:
a body (2),
a handle (3) arranged on the body (2),
a nozzle (4) connected with the body (2) via a suction pipe (5) and having at least two rotating brush rollers (6, 6') for cleaning a surface,
an input unit (7) for providing data for assisting movement of the nozzle (4),
two or more electric motors (8, 8') connected to the brush rollers (6, 6') and providing a rotational force,
rotary encoders (9, 9') connected with the brush rollers (6, 6') to count the number and direction of their revolutions,
and a control unit (12) having a processor (11) with memory for processing and storing data and for driving the electric motors (8, 8') by applying a voltage to the motors (8, 8'),
wherein the input unit (7) that is arranged in the nozzle (4) and provided with an inertial measurement unit (IMU) sensor (13) that is configured to measure an accelerations along XY-axes and an angle of rotation around the Z-axis that is perpendicular to the cleaned surface which is defined by axes XY-axes, and by the control unit (12) being arranged to receive data from the input unit (7) to drive the motors (8, 8') according to the measured accelerations along XY-axes and the angle of rotation around the Z-axis for assisting movement of the nozzle (4) in one or more predetermined directions.

2. The handheld vacuum cleaner according to claim 1, **characterized in that** the control unit (12) is configured to drive the motors (8, 8') by applying voltages to the motors (8, 8') which varies depending on a value of the voltage gained by multiplying an angle of rotation around the Z-axis signal received from the input unit (7) by a first constant and the value of the voltage gained by multiplying accelerations along XY-axes by a second constant.

3. The handheld vacuum cleaner according to claim 2, **characterized in that** the control unit (12) provides the right electric motor (8) with the voltage which is a sum of a predetermined constant value of the voltage and a value of the voltage gained by multiplying an angle of rotation around the Z-axis signal received from the input unit (7) by a first constant and a value of the voltage gained by multiplying accelerations along XY-axes by a second constant, and the left electric motor (8') is provided with the voltage which is the predetermined constant value of the voltage minus the value of the voltage gained by multiplying an angle of rotation around the Z-axis signal received from the input unit (7) by a first constant, and minus the value of the voltage gained by multiplying accelerations along XY-axes by a second constant.

4. The handheld vacuum cleaner according to any of the preceding claims, **characterized in that** the nozzle (4) comprises two wheels (10, 10') rotatable provided in a lower portion of the nozzle (4) disposed on the sides of the nozzle (4) and configured to drive the nozzle (4) across the cleaned surface, wherein each of the wheels (10, 10') is provided with rotatable encoders (14, 14') and electric motors (15, 15') being configured to drive them by the control unit (12).

5. The handheld vacuum cleaner according to claim 4, **characterized in that** the control unit (12) is configured to drive wheels (10, 10') in the same direction and with the same rotational speed as the brush roller (6, 6') placed on the same side of the nozzle (4).

6. The handheld vacuum cleaner according to any of the preceding claims, **characterized in that** the body (2) is provided with a joystick controller (16) having a sensor equipped with an operating rod (17) that is pivotally mounted relative to the body (2) about a pivot center within the body (3) so as to effect movement of the operating rod (17) the sensor provides an output signal indicative of a degree of pivotal movement of the operating rod (17),

7. The handheld vacuum cleaner according to claim 6, **characterized in that** the control unit (12) is configured to receive the output signal of the sensor and to drive brush rollers (6, 6') or/and drive wheels (10, 10').

8. The handheld vacuum cleaner according to any of the preceding claims, **characterized in that** the nozzle (4) is equipped with an optical sensor providing an output indicative of the amount and direction of movement of the nozzle (4) relative to the cleaned surface, wherein the control unit (12) is configured to receive and process data.

9. The handheld vacuum cleaner according to any of the preceding claims, **characterized in that** the body (3) is provided with an inertial measurement unit (IMU) sensor (18) which is configured to measure accelerations of the body (2) along XYZ-axes.

10. A Method for operating the handheld vacuum cleaner (1) according to any of the claims 1-3, having the following method steps:
- driving brush rollers (6, 6') both with the same predetermined rotational speed by the control unit (12),
- measuring accelerations of the nozzle (4) along XY-axes by the inertial measurement unit (IMU) sensor (13) of the input unit (7),
- measuring the angle α of rotation of the nozzle (4) around the Z-axis, wherein the Z-axis is perpendicular to the cleaned surface defined by XY-axes the by the inertial measurement unit (IMU) sensor (13) of the input unit (7);
- the control unit (12) drives the brush rollers (6, 6') according to measuring accelerations of the nozzle (4) along XY-axes and/or angle of rotation of the nozzle (4) around the Z-axis.
- wherein the control unit (12) provides the right electric motor (8) connected to the brush roller (6) with the voltage which is a sum of a predetermined constant value of the voltage and a value of the voltage gained by multiplying an angle of rotation around the Z-axis signal received from the input unit (7) by a first constant and a value of the voltage gained by multiplying accelerations along XY-axes by a second constant, and providing the left electric motor (8') connected to the left brush roller (6') with the voltage which is the predetermined constant value of the voltage minus the value of the voltage gained by multiplying an angle of rotation around the Z-axis signal received from the input unit (7) by a first constant, and minus the value of the voltage gained by multiplying accelerations along XY-axes by a second constant.

## Patentansprüche

1. Handstaubsauger (1) umfassend:
ein Gehäuse (2),
einen Griff (3), der am Gehäuse (2) angeordnet ist,
eine Düse (4), die mit dem Gehäuse (2) über ein Saugrohr (5) verbunden ist und mindestens zwei rotierende Bürstenwalzen (6, 6') zur Reinigung einer Oberfläche aufweist,
eine Eingabeeinheit (7) zur Bereitstellung von Daten zur Unterstützung der Bewegung der Düse (4),
zwei oder mehr Elektromotoren (8, 8'), die mit den Bürstenwalzen (6, 6') verbunden sind und eine Rotationskraft bereitstellen,
Drehgeber (9, 9'), die mit den Bürstenwalzen (6, 6') verbunden sind, um die Anzahl und Richtung ihrer Umdrehungen zu zählen,
und eine Steuereinheit (12) mit einem Prozessor (11) mit Speicher zur Verarbeitung und Speicherung von Daten und zum Antrieb der Elektromotoren (8, 8') durch Anlegen einer Spannung an die Motoren (8, 8'),
wobei die Eingabeeinheit (7) in der Düse (4) angeordnet ist und mit einem Trägheitsmesseinheit-Sensor (IMU-Sensor) (13) ausgestattet ist, der konfiguriert ist, um Beschleunigungen entlang der XY-Achsen und einen Rotationswinkel um die Z-Achse zu messen, die senkrecht zur gereinigten Oberfläche steht, welche durch die XY-Achsen definiert ist, und wobei die Steuereinheit (12) angeordnet ist, um Daten von der Eingabeeinheit (7) zu empfangen, um die Motoren (8, 8') entsprechend den gemessenen Beschleunigungen entlang der XY-Achsen und dem Rotationswinkel um die Z-Achse anzutreiben, um die Bewegung der Düse (4) in eine oder mehrere vorbestimmte Richtungen zu unterstützen.

2. Handstaubsauger nach Anspruch 1, **dadurch gekennzeichnet, dass** die Steuereinheit (12) konfiguriert ist, um die Motoren (8, 8') durch Anlegen von Spannungen an die Motoren (8, 8') anzutreiben, die je nach einem Spannungswert variieren, der durch Multiplikation eines von der Eingabeeinheit (7) empfangenen Rotationswinkel-um-die-Z-Achse-Signals mit einer ersten Konstante gewonnen wird, und dem Spannungswert, der durch Multiplikation der Beschleunigungen entlang der XY-Achsen mit einer zweiten Konstante gewonnen wird.

3. Handstaubsauger nach Anspruch 2, **dadurch gekennzeichnet, dass** die Steuereinheit (12) dem rechten Elektromotor (8) die Spannung zuführt, die eine Summe aus einem vorbestimmten konstanten Spannungswert und einem Spannungswert ist, der durch Multiplikation eines von der Eingabeeinheit (7) empfangenen Rotationswinkel-um-die-Z-Achse-Signals mit einer ersten Konstante gewonnen wird, und einem Spannungswert, der durch Multiplikation der Beschleunigungen entlang der XY-Achsen mit einer zweiten Konstante gewonnen wird, und der linke Elektromotor (8') mit der Spannung versorgt wird, die der vorbestimmte konstante Spannungswert minus dem Spannungswert ist, der durch Multiplikation eines von der Eingabeeinheit (7) empfangenen Rotationswinkel-um-die-Z-Achse-Signals mit einer ersten Konstante gewonnen wird, und minus dem Spannungswert, der durch Multiplikation der Beschleunigungen entlang der XY-Achsen mit einer zweiten Konstante gewonnen wird.

4. Handstaubsauger nach einem der vorhergehenden Ansprüche, **dadurch gekennzeichnet, dass** die Düse (4) zwei drehbare Räder (10, 10') umfasst, die im unteren Bereich der Düse (4) an den Seiten der Düse (4) angeordnet und konfiguriert sind, um die Düse (4) über die gereinigte Oberfläche zu bewegen, wobei jedes der Räder (10, 10') mit Drehgebern (14, 14') und Elektromotoren (15, 15') ausgestattet ist, die von der Steuereinheit (12) angetrieben werden.

5. Handstaubsauger nach Anspruch 4, **dadurch gekennzeichnet, dass** die Steuereinheit (12) konfiguriert ist, um die Räder (10, 10') in derselben Richtung und mit derselben Rotationsgeschwindigkeit wie die Bürstenwalze (6, 6') anzutreiben, die auf derselben Seite der Düse (4) angeordnet ist.

6. Handstaubsauger nach einem der vorhergehenden Ansprüche, **dadurch gekennzeichnet, dass** das Gehäuse (2) mit einem Joystick-Controller (16) ausgestattet ist, der einen Sensor mit einem Betätigungsstab (17) aufweist, der schwenkbar relativ zum Gehäuse (2) um einen Schwenkpunkt innerhalb des Gehäuses (3) montiert ist, um eine Bewegung des Betätigungsstabs (17) zu bewirken, wobei der Sensor ein Ausgangssignal bereitstellt, das den Grad der Schwenkbewegung des Betätigungsstabs (17) anzeigt,

7. Handstaubsauger nach Anspruch 6, **dadurch gekennzeichnet, dass** die Steuereinheit (12) konfiguriert ist, um das Ausgangssignal des Sensors zu empfangen und Bürstenwalzen (6, 6') und/oder Antriebsräder (10, 10') anzutreiben.

8. Handstaubsauger nach einem der vorhergehenden Ansprüche, **dadurch gekennzeichnet, dass** die Düse (4) mit einem optischen Sensor ausgestattet ist, der ein Ausgangssignal bereitstellt, das die Menge und Richtung der Bewegung der Düse (4) relativ zur gereinigten Oberfläche anzeigt, wobei die Steuereinheit (12) konfiguriert ist, um Daten zu empfangen und zu verarbeiten.

9. Handstaubsauger nach einem der vorhergehenden Ansprüche, **dadurch gekennzeichnet, dass** das Gehäuse (3) mit einem Trägheitsmesseinheit-Sensor (IMU-Sensor) (18) ausgestattet ist, der konfiguriert ist, um Beschleunigungen des Gehäuses (2) entlang der XYZ-Achsen zu messen.

10. Verfahren zum Betrieb des Handstaubsaugers (1) nach einem der Ansprüche 1-3, mit den folgenden Verfahrensschritten:
- Antreiben der Bürstenwalzen (6, 6') beide mit derselben vorbestimmten Rotationsgeschwindigkeit durch die Steuereinheit (12),
- Messen der Beschleunigungen der Düse (4) entlang der XY-Achsen durch den Trägheitsmesseinheit-Sensor (IMU-Sensor) (13) der Eingabeeinheit (7),
- Messen des Rotationswinkels α der Düse (4) um die Z-Achse, wobei die Z-Achse senkrecht zur gereinigten Oberfläche steht, die durch die XY-Achsen definiert ist, durch den Trägheitsmesseinheit-Sensor (IMU (inertial measurement unit)-Sensor) (13) der Eingabeeinheit (7);
- die Steuereinheit (12) die Bürstenwalzen (6, 6') entsprechend der Messung der Beschleunigungen der Düse (4) entlang der XY-Achsen und/oder des Rotationswinkels der Düse (4) um die Z-Achse antreibt.
- wobei die Steuereinheit (12) dem rechten Elektromotor (8), der mit der Bürstenwalze (6) verbunden ist, die Spannung zuführt, die eine Summe aus einem vorbestimmten konstanten Spannungswert und einem Spannungswert ist, der durch Multiplikation eines von der Eingabeeinheit (7) empfangenen Rotationswinkel-um-die-Z-Achse-Signals mit einer ersten Konstante gewonnen wird, und einem Spannungswert, der durch Multiplikation der Beschleunigungen entlang der XY-Achsen mit einer zweiten Konstante gewonnen wird, und dem linken Elektromotor (8'), der mit der linken Bürstenwalze (6') verbunden ist, die Spannung zuführt, die der vorbestimmte konstante Spannungswert minus dem Spannungswert ist, der durch Multiplikation eines von der Eingabeeinheit (7) empfangenen Rotationswinkel-um-die-Z-Achse-Signals mit einer ersten Konstante gewonnen wird, und minus dem Spannungswert, der durch Multiplikation der Beschleunigungen entlang der XY-Achsen mit einer zweiten Konstante gewonnen wird.

## Revendications

1. Aspirateur portatif (1) comprenant :
un corps (2),
une poignée (3) disposée sur le corps (2),
une buse (4) reliée au corps (2) par un tuyau d'aspiration (5) et ayant au moins deux rouleaux à brosse rotatifs (6, 6') pour nettoyer une surface, une unité d'entrée (7) pour fournir des données afin d'assister le mouvement de la buse (4), deux moteurs électriques ou plus (8, 8') reliés aux rouleaux à brosse (6, 6') et fournissant une force de rotation, des codeurs rotatifs (9, 9') reliés aux rouleaux à brosse (6, 6') pour compter le nombre et le sens de leurs tours, et une unité de commande (12) ayant un processeur (11) avec mémoire pour traiter et stocker des données et pour actionner les moteurs électriques (8, 8') en appliquant une tension aux moteurs (8, 8'), dans lequel l'unité d'entrée (7) qui est disposée dans la buse (4) et pourvue d'un capteur (13) d'unité de mesure inertielle (IMU) qui est configuré pour mesurer une accélération le long des axes XY et un angle de rotation autour de l'axe Z qui est perpendiculaire à la surface nettoyée qui est définie par les axes XY, et par l'unité de commande (12) étant disposée pour recevoir des données provenant de l'unité d'entrée (7) afin d'actionner les moteurs (8, 8') en fonction des accélérations mesurées le long des axes XY et de l'angle de rotation autour de l'axe Z pour assister le mouvement de la buse (4) dans une ou plusieurs direction(s) prédéterminée(s).

2. Aspirateur portatif selon la revendication 1, **caractérisé en ce que** l'unité de commande (12) est configurée pour actionner les moteurs (8, 8') en appliquant aux moteurs (8, 8') des tensions qui varient en fonction d'une valeur de la tension obtenue en multipliant un angle de rotation autour du signal de l'axe Z reçu de l'unité d'entrée (7) par une première constante et de la valeur de la tension obtenue en multipliant les accélérations le long des axes XY par une deuxième constante.

3. Aspirateur portatif selon la revendication 2, **caractérisé en ce que** l'unité de commande (12) fournit au moteur électrique droit (8) la tension qui est la somme d'une valeur constante prédéterminée de la tension et d'une valeur de la tension obtenue en multipliant un angle de rotation autour du signal de l'axe Z reçu de l'unité d'entrée (7) par une première constante et d'une valeur de la tension obtenue en multipliant les accélérations le long des axes XY par une deuxième constante, et le moteur électrique gauche (8') est alimenté par la tension qui est la valeur constante prédéterminée de la tension moins la valeur de la tension obtenue en multipliant un angle de rotation autour du signal de l'axe Z reçu de l'unité d'entrée (7) par une première constante, et moins la valeur de la tension obtenue en multipliant les accélérations le long des axes XY par une deuxième constante.

4. Aspirateur portatif selon l'une quelconque des revendications précédentes, **caractérisé en ce que** la buse (4) comprend deux roues (10, 10') rotatives prévues dans une partie inférieure de la buse (4), disposées sur les côtés de la buse (4) et configurées pour faire rouler la buse (4) sur la surface nettoyée, dans lequel chacune des roues (10, 10') est pourvue d'encodeurs rotatifs (14, 14') et de moteurs électriques (15, 15') étant configurés pour les entraîner via l'unité de commande (12).

5. Aspirateur portatif selon la revendication 4, **caractérisé en ce que** l'unité de commande (12) est configurée pour actionner les roues (10, 10') dans le même sens et à la même vitesse de rotation que le rouleau à brosse (6, 6') placé du même côté de la buse (4).

6. Aspirateur portatif selon l'une quelconque des revendications précédentes, **caractérisé en ce que** le corps (2) est pourvu d'une manette à joystick (16) ayant un capteur équipé d'une tige de commande (17) qui est montée de façon pivotante par rapport au corps (2) autour d'un centre de pivotement à l'intérieur du corps (3) de sorte à effectuer le mouvement de la tige de commande (17), le capteur fournissant un signal de sortie indiquant un degré de mouvement pivotant de la tige de commande (17).

7. Aspirateur portatif selon la revendication 6, **caractérisé en ce que** l'unité de commande (12) est configurée pour recevoir le signal de sortie du capteur et pour actionner les rouleaux à brosse (6, 6') et/ou actionner les roues (10, 10').

8. Aspirateur portatif selon l'une quelconque des revendications précédentes, **caractérisé en ce que** la buse (4) est équipée d'un capteur optique fournissant une sortie indicative de l'ampleur et du sens du mouvement de la buse (4) par rapport à la surface nettoyée, dans lequel l'unité de commande (12) est configurée pour recevoir et traiter des données.

9. Aspirateur portatif selon l'une quelconque des revendications précédentes, **caractérisé en ce que** le corps (3) est pourvu d'un capteur (18) d'unité de mesure inertielle (IMU) qui est configuré pour mesurer les accélérations du corps (2) le long des axes XYZ.

10. Procédé d'exploitation de l'aspirateur portatif (1) selon l'une quelconque des revendications 1 à 3, ayant les étapes de procédé suivantes :
- actionnement des rouleaux à brosse (6, 6') tous deux à la même vitesse de rotation prédéterminée par l'unité de commande (12),
- mesure des accélérations de la buse (4) le long des axes XY par le capteur (13) d'unité de mesure inertielle (IMU) de l'unité d'entrée (7),
- mesure de l'angle α de rotation de la buse (4) autour de l'axe Z, dans lequel l'axe Z est perpendiculaire à la surface nettoyée définie par les axes XY, via le capteur (13) de l'unité de mesure inertielle (IMU) de l'unité d'entrée (7) ;
- l'unité de commande (12) actionne les rouleaux à brosse (6, 6') en fonction des accélérations mesurées de la buse (4) le long des axes XY et/ou de l'angle de rotation de la buse (4) autour de l'axe Z ;
- dans lequel l'unité de commande (12) fournit au moteur électrique droit (8) relié au rouleau à brosse (6) la tension qui est la somme d'une valeur constante prédéterminée de la tension et d'une valeur de la tension obtenue en multipliant un angle de rotation autour du signal de l'axe Z reçu de l'unité d'entrée (7) par une première constante et d'une valeur de la tension obtenue en multipliant les accélérations le long des axes XY par une deuxième constante, et fournit au moteur électrique gauche (8') relié au rouleau à brosse gauche (6') la tension qui est la valeur constante prédéterminée de la tension moins la valeur de la tension obtenue en multipliant un angle de rotation autour du signal de l'axe Z reçu de l'unité d'entrée (7) par une première constante, et moins la valeur de la tension obtenue en multipliant les accélérations le long des axes XY par une deuxième constante.
